# EUROPÄISCHE PATENTANMELDUNG

(11) **EP 1 114 689 A2**
(43) Veröffentlichungstag der Anmeldung: **11.07.2001**
(21) Anmeldenummer: 01100401.7
(22) Anmeldetag: 06.01.2001
(51) Int. Cl.: B23K 10/00, B23K 37/02, B23H 1/04, B23Q 15/00

(54) **Mobile Werkstoffbearbeitungsvorrichtung**

(30) Priorität: 07.01.2000 DE 10000436
(71) Anmelder: Dahlhaus, Andreas, 48712 Gescher (DE)
(72) Erfinder: Dahlhaus, Andreas, 48712 Gescher (DE)
(74) Vertreter: Möbus, Steffen

(57) **Zusammenfassung**

Eine mobile Werkstoffbearbeitungsvorrichtung zum Schneiden, Bohren, Fräsen oder dergleichen, umfaßt einen Rahmen, eine Führungseinrichtung zur Führung eines Werkzeugs auf wenigstens zwei Achsen, eine Schnittstelleneinrichtung für den Anschluß eines externen Rechners, eine als Schrittmotor ausgebildete Antriebseinheit, und hat ein Gesamtgewicht von weniger als 40 kg.

## Beschreibung

Die vorliegende Erfindung betrifft eine mobile Werkstoffbearbeitungsvorrichtung gemäß Anspruch 1. Aus dem Stand der Technik sind keine mobilen Werkstoffbearbeitungsvorrichtungen bekannt.

Es sind natürlich Werkstoffbearbeitungsmaschinen bekannt, die als stationäre Einheit in Unternehmen aufgestellt sind. Solche großen Maschinen sind jedoch für kleinere metallverarbeitende Betriebe wirtschaftlich nicht interessant da ihre Anschaffung sehr teuer und die Auslastung sehr gering ist. Darüber hinaus werden solche großen stationären Maschinen über spezielle Rechner betrieben, deren Anschaffimg wiederum Kosten erzeugt.

Die Aufgabe der vorliegenden Erfindung ist daher, eine stationäre Werkstoffbearbeitungsmaschine derart weiter zu bilden, daß diese nicht nur mobil, sondern tragbar wird und mit handelsüblichen Peripheriegeräten betrieben werden kann.

Die Aufgabe wird erfindungsgemäß durch die Merkmale des Anspruchs 1 gelöst. Weitere vorteilhafte Merkmale ergeben sich aus den Unteransprüchen 2 bis 8.

Die erfindungsgemäße mobile Werkstoffbearbeitungsvorrichtung zum Schneiden, Bohren, Fräsen oder dergleichen gemäß einem der Ansprüche 1 bis 8 kann als portabler NC3-Achsen-Tisch ausgebildet sein und an jeden handelsüblichen Personalcomputer angeschlossen werden. Schnittdaten werden nach DIN/ISO-Format oder bequem per CAD-Software generiert. Es ist sowohl möglich, die erfindungsgemäße mobile Werkstoffbearbeitungsvorrichtung fest einzurichten oder als portable 3-Achs-Einheit einzusetzen, z. B. zum Schneiden von Schaltschrankbohrbildern oder zum Brennen von Teilen aus einem Metallblech.

Als Schneidwerkzeug kann ein handelsüblicher Plasmabrenner eingesetzt werden, wodurch die mobile Werkstoffbearbeitungsvorrichtung für kleine und mittlere Metallverarbeitungsbetriebe interessant wird, da die Herstellungskosten gegenüber vergleichbaren CNC-Brennschneidmaschinen sehr gering sind. Darüber hinaus könnte der benötigte Standard-Plasmabrenner wie gewohnt mit wenigen Handgriffen auch ohne die erfindungsgemäße mobile Werkstoffbearbeitungsvorrichtung genutzt werden.

Eine Ausfühnmgsform der vorliegenden Erfindung wird im folgenden anhand der Zeichnungen näher beschrieben. Es zeigen:
- Fig. 1: eine schematische Ansicht einer mobilen Werkstoffbearbeitungsvorrichtung gemäß vorliegender Erfindung mit angeschlossenem Achsverstärker und angeschlossenem Rechner;
- Fig. 2: eine schematische Draufsicht auf die mobile Werkstoffbearbeitungsvorrichtung aus Fig. 1.
- Fig. 3a: eine schematische Draufsicht einer konkreten Ausführungsform gemäß vorliegender Erfindung und in Übereinstimmung mit Angaben der in der BeSchreibung angegebenen Tabelle;
- Fig.3b: eine schematische Schnittdarstellung entlang Linie A-A der konkreten Ausführungsform aus Fig. 3a.

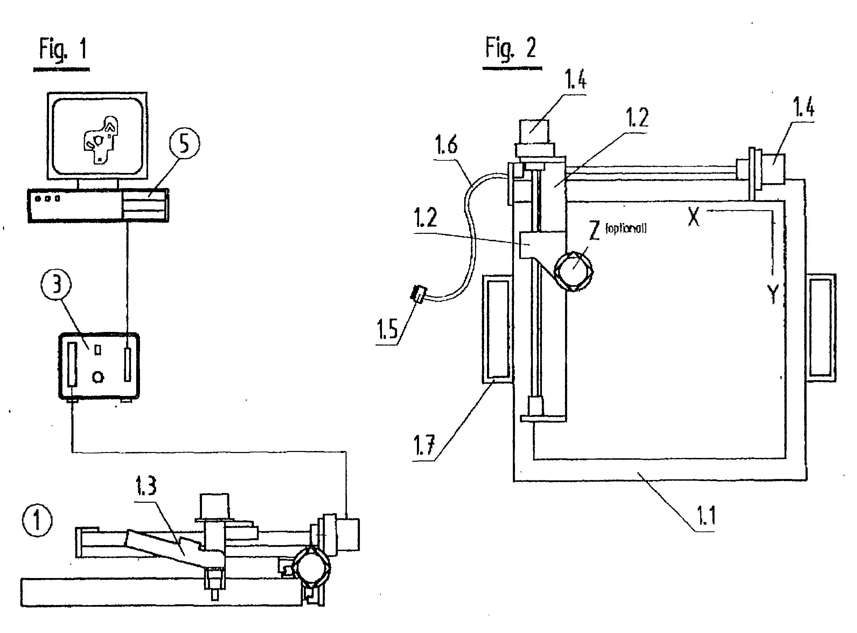

In Fig. 1 ist schematisch dargestellt, wie die erfindungsgemäße mobile Werkstoffbearbeitungsvorrichtung 1 mit einem Achsverstärker 3 und einem Rechner 5 verbunden ist. In Fig. 2 ist schematisch eine Draufsicht der mobilen Werkstoffbearbeitungsvorrichtung 1 dargestellt. Die mobile Werkstoffbearbeitungsvorrichtung umfaßt einen Rahmen 1.1, mit zwei oder drei Achsen X, Y und/oder Z. Auf den Achsen X, Y und/oder Z ist eine Führungseinrichtung 1.2 angeordnet, an der ein Werkzeug 1.3 angebracht ist. Die Führungseinrichtung 1.2 umfaßt ein Linearkugellager mit Kugelumlaufspindeln (nicht dargestellt) mit einem Längsspiel von max. 0,04 mm. Als Antriebseinheit 1.4 für die Führungseinrichtung 1.2 dient an jeder Achse ein Achsmotor, der als Schrittmotor ausgebildet sind.

An dem Rahmen 1.1 ist eine Schnittstelle 1.5 angeordnet, über die mit Hilfe eines Verbindungskabels 1.6 eine Wirkverbindung zu dem Achsverstärker 3 hergestellt ist- Ferner ist an einer Außenseite des Rahmens 1.1 ein Tragegriff 1.7 angeordnet. Ein solcher Tragegriff 1.7 kann an jeder Seitenbegrenzung des Rahmens 1.1 angebracht sein.

Der Achsverstärker 3 umfaßt eine Achsverstärkerplatine sowie eine Zusatzplatine zur Steuerung z. B. eines Plasma-brenners und ein Netzgerät zur Stromversorgung der Achsverstärkerplatine. Das für den Achsverstärker 3 gewählte Gehäuse ist staubdicht ausgebildet.

Der Rechner 5, welcher an den Achsverstärker 3 mittels Kabel angeschlossen ist, ist in der vorliegenden Ausführungsform ein Personalcomputer, der mit einem Standard-Betriebssystem, z. B. Windows 95 betrieben wird. Der Rechner ist staubdicht in einem Gehäuse eingeschlossen. Der Rechner enthält zudem eine Reihe von geladenen Programmen, insbesondere ein Schnittdatenoptimierungsprogramm, z. B. HPGLOPTI, ein Ansteuerprogramm für die NC, z. B. das Programm PCNC sowie als Zeichenprogramm, z. B. das CAD-Programm EUROCAD.

Als Werkzeug 1.3 kann beispielsweise ein Plasmabrenner verwendet werden, der einen zusätzlichen Steueranschluß für den Achsverstärker 3 umfaßt und dennoch als normaler Plasmaschneider in einer Werkstatt eingesetzt werden kann. Zum Beispiel kann als Werkzeug das Gerät PLASMA-PROF 50 der Firma CEBORA verwendet werden.

Für die Schnittdatenerstellung können die Grunddaten aus 2D-Zeichnungen entsprechend eines der vorgenannten Zeichnungsprogramme gewonnen werden. Dazu werden alle Schrift-Bemaßungs- und nicht erwünschten Konturelemente aus der Ursplungszeichnung entfernt. Anschließend wird die Kontur, welche sich im Arbeitsbereich der Maschine befinden muß, von der CAD-Software in ein PLT-Format konvertiert. Mit dem Programm HPGLOPTI werden dann die Schnittvektoren mit der halben Schnittnahtbreite errechnet und in der günstigsten Reihenfolge aneinandergereiht.

Den Brennvorgang steuert dann die Software PCNC bei freier Wahl der Schnittgeschwindigkeit. Das Brenn-Ergebnis, das heißt, die Ausbildung der Schnittkantehängt hauptsächlich von der Art des verwendeten Plasmabrenners und insbesondere von dessen Leistung ab.

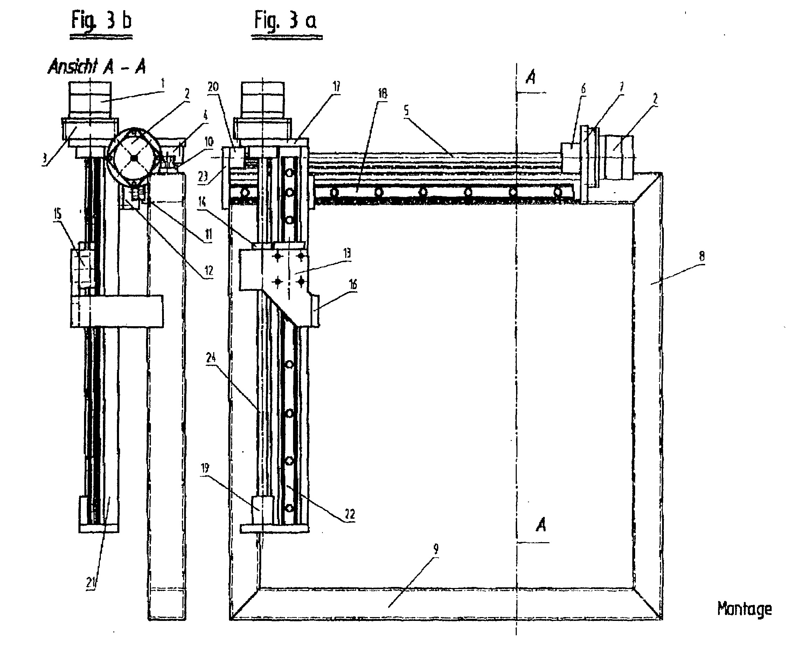

In Fig. 3a und 3b ist schematisch eine konkrete Ausführungsform einer mobilen Werkstoffbearbeitungsvorrichtung gemäß vorliegender Erfindung und in Übereinstimmung mit der nachfolgenden Tabelle dargestellt, einmal in Draufsicht (Fig. 3a) und einmal im Schnitt entlang Linie A-A (Fig. 3b). Die in Fig. 3a und 3b verwendeten Bezugszeichen entsprechen der Positionsangabe in der ersten Spalte der Tabelle.

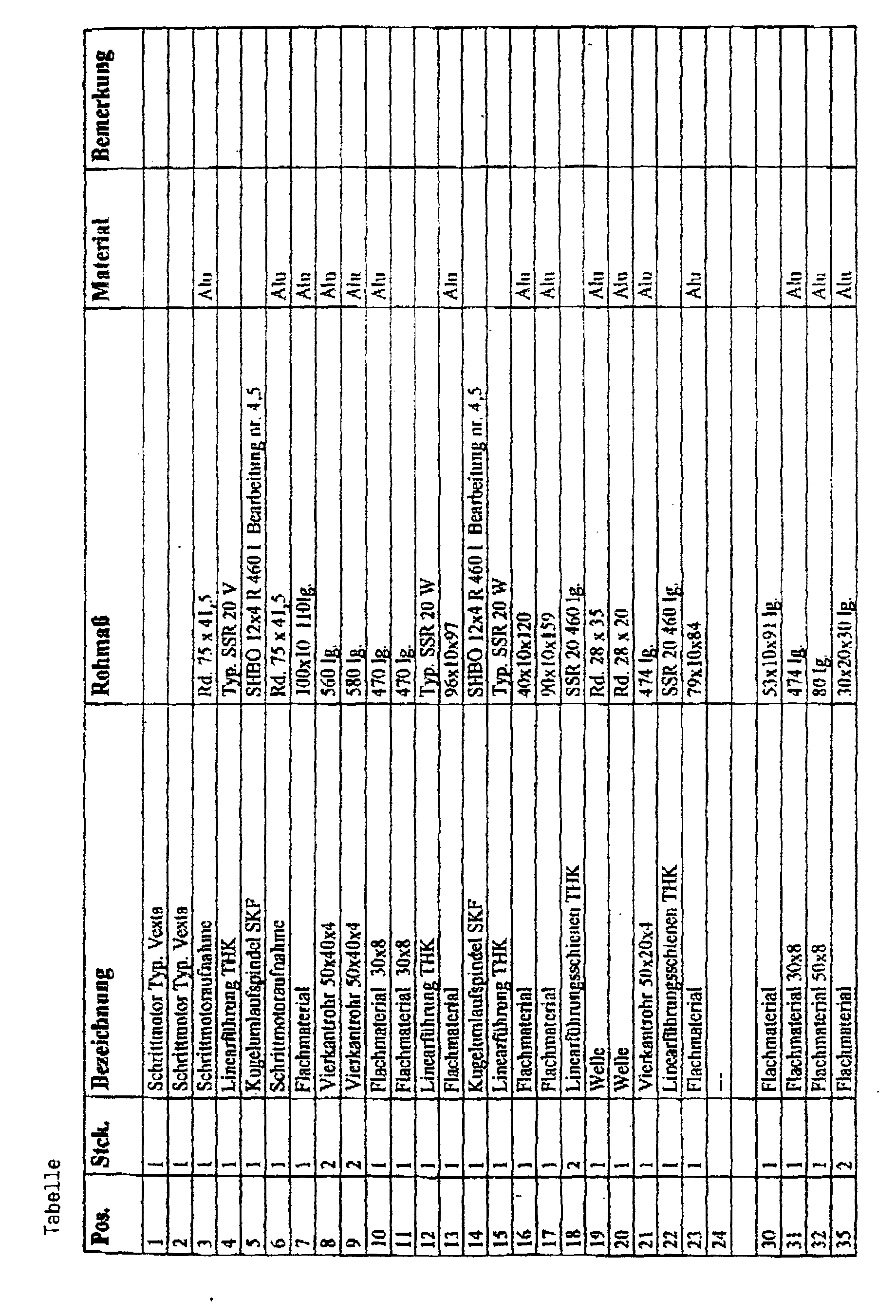

## Patentansprüche

1. Mobile Werkstoffbearbeitungsvorrichtung zum Schneiden, Bohren, Fräsen oder dergleichen,
- mit einem Rahmen (1.1);
- mit einer Führungseinrichtung (1.2) zur Führung eines Werkzeugs (1.3) auf einer Achse (X, Y, Z);
- mit einer Schnittstelleneinnchtung (1.5) zum Anschluß eines externen Rechners (5);
- mit einer als Schrittmotor ausgebildeten Antriebseinheit (1.4), und
- mit einem Gesamtgewicht von weniger als 40 kg.

2. Mobile Werstoffbearbeitungsvorrichtung nach Anspruch 1,
dadurch gekennzeichnet,
daß der Rahmen (1.1) aus Aluminium gefertigt ist.

3. Mobile Werkstoffbearbeitungsvorrichtung nach Anspruch 1 oder 2,
**dadurch gekennzeichnet,**
daß die Führungseinrichtung (1.2) ein Linearkugellager mit Kugelumlaufspindeln umfaßt.

4. Mobile Werkstoffbearbeitungsvorrichtung nach einem der Ansprüche 1 bis 3,
**dadurch gekennzeichnet,**
daß die Führungseinrichtung (1.2) eine Achsverstärkung aufweist.

5. Mobile Werstoffbearbeitungsvorrichtung nach Anspruch 4,
**dadurch gekennzeichnet,**
daß die Achsverstärkung durch eine Achsverstärkerplatine erfolgt, die in einem externen Gehäuse (3) aufgenommen ist und über ein Verbindungselement (1.6) mit der Führungseinrichtung (1.2) wirkverbunden ist.

6. Mobile Werkstoffbearbeitungsvorrichtung nach einem der vorstehenden Ansprüche,
**dadurch gekennzeichnet,**
daß der Rechner (5) ein Personalcomputer ist und einen Monitor umfaßt.

7. Mobile Werkstoffbearbeitungsvorrichtung nach einem der vorstehenden Ansprüche.
**dadurch gekennzeichnet,**
daß der Rechner (5) softwaregesteuert ist mit wenigstens einem der Programme aus der Gruppe bestehend aus Windows-Betriebssystem, Schnittdatenopitmierungsprogramm, Ansteuersoftware, Zeichnungsoftware.

8. Mobile Werkstoffbearbeitungsvorrichtung nach einem der vorstehenden Ansprüche,
**dadurch gekennzeichnet,**
daß das Werkzeug (1.3) ein Plasmabrenner oder ähnlich ist.
